# EUROPEAN PATENT APPLICATION

(11) **EP 4 730 764 A1**
(43) Date of publication of application: **22.04.2026**
(21) Application number: 25744477.8
(22) Date of filing: 14.01.2025
(51) Int. Cl.: H04N 9/31

(54) **METHOD AND SYSTEM FOR CALIBRATING VEHICLE PROJECTION DEVICE, AND VEHICLE**

(30) Priority: 25.01.2024 CN 202410108356
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHANG, Yi, Ningbo, Zhejiang 315899 (CN)
(74) Representative: Michalski Hüttermann & Partner Patentanwälte mbB
(86) International application number: PCT/CN2025/072222
(87) International publication number: WO 2025/157034

(57) **Abstract**

Provided in the present disclosure are a method and system for calibrating vehicle projection device, and vehicle. The method for calibrating a vehicle projection device includes: determining actual projection ground information of a projection device; according to the actual projection ground information, determining reference information of the projection device relative to an actual projection ground; and adjusting the projection device according to the reference information.

## Description

### CROSS-REFERENCE TO RELATED APPLICATIONS

This application claims priority to Chinese Patent Application No. 2024101083560, filed on January 25, 2024, entitled "Method and System for Calibrating Vehicle Projection Device, Vehicle, and Storage Medium", which is incorporated herein by reference in its entirety.

### TECHNICAL FIELD

The present disclosure relates to, but is not limited to, the field of vehicle technologies, and in particular, to a method and system for calibrating a vehicle projection device, and a vehicle.

### BACKGROUND

The vehicle projection device is mounted on a vehicle body of the vehicle, and a position of the vehicle projection device and a projection image are calibrated before the vehicle leaves the factory.

### SUMMARY

The following is a summary of subject matter described in detail herein. This summary is not intended to limit the scope of the claims.

The present disclosure provides an improved method and a system for calibrating vehicle projection device, a vehicle and a storage medium.

The present disclosure provides a method for calibrating a vehicle projection device includes: determining information of an actual projection ground of a projection device; determining reference information of the projection device relative to an actual projection ground, according to the information of the actual projection ground; and adjusting the projection device according to the reference information.

In some embodiments, determining the information of the actual projection ground of the projection device includes: controlling the projection device to project a calibration pattern on the actual projection ground, where the calibration pattern includes black squares and white squares distributed in a checkerboard pattern in both a longitudinal direction and a latitudinal direction, respectively; determining whether the calibration pattern is deformed; in response to determining that the calibration pattern is deformed, determining whether a deformation amount of the calibration pattern is continuous; in response to determining that the deformation amount of the calibration pattern is continuous, determining that the actual projection ground is an inclined surface; and in response to determining that the deformation amount of the calibration pattern is discontinuous, determining that an obstacle exists on the actual projection ground.

In some embodiments, after determining that the actual projection ground is the inclined surface, determining the reference information of the projection device relative to the actual projection ground according to the information of the actual projection ground includes: obtaining vehicle inclined angles of the vehicle relative to the inclined surface and a device state angle of the projection device relative to the vehicle; determining device inclined angles of the projection device relative to the inclined surface according to the vehicle inclined angle and the device state angle; and determining a maximum value of the device inclined angles as an inclined angle of the projection device relative to the inclined surface.

In some embodiments, after determining that the actual projection ground is the inclined surface, determining the reference information of the projection device relative to the actual projection ground according to the information of the actual projection ground includes: pre-controlling the projection device to project the calibration pattern onto preset inclined surfaces with different inclined angles to obtain a calibration images corresponding to the different inclined angles; obtaining a deformed projection image; and comparing the projection image with the different calibration images; and determining an inclined angle corresponding to one of the different calibration images as an inclined angle of the projection device relative to the inclined surface.

In some embodiments, the vehicle includes a rotating platform, and the projection device is assembled on the rotating platform; and adjusting the projection device according to the reference information includes: controlling the rotating platform to rotate the inclined angle relative to the inclined surface toward the inclined surface, to drive the projection device to adjust the inclined angle relative to the inclined surface.

In some embodiments, a rotation direction of the rotating platform is consistent with an inclination direction of the inclined surface relative to the vehicle.

In some embodiments, a rotation angle of the rotating platform is consistent with an inclined angle of the inclined surface relative to the vehicle.

In some embodiments, after determining that there is the obstacle on the actual projection ground, determining the reference information of the projection device relative to the actual projection ground according to the information of the actual projection ground includes: determining and marking a boundary line of the obstacle in a projection region.

In some embodiments, the projection device includes display components; and adjusting the projection device according to the reference information includes: determining a part of display components projected onto a region of the obstacle according to the marked boundary line of the obstacle; and controlling the determined part of the display components to be turned off, so that the projection image within the region of the obstacle is not displayed.

In some embodiments, the projection device includes an optical assembly; and adjusting the projection device according to the reference information includes: determining a maximum size of the projection image of the projection device according to the marked boundary line of the obstacle, an edge of the projection image with the maximum size is inside the boundary line; and controlling the optical assembly to adjust the projection image of the projection device to the maximum size, so that the projection region is outside the region of the obstacle.

The present disclosure further provides a computer-readable storage medium having a program stored thereon, where the program, when executed by a processor, implements the method for calibrating a vehicle projection device according to any one of the above embodiments.

The present disclosure further provides a system for calibrating a vehicle projection device, including: one or more processors configured to implement the method for calibrating a vehicle projection device according to any one of the above embodiments.

The present disclosure further provides a vehicle, including: the system for calibrating the vehicle projection device as described in the above embodiments.

Embodiments of the present disclosure provides a method and a system for calibrating vehicle projection device, a vehicle and a storage medium. According to the method for calibrating the vehicle projection device, the information of the actual projection ground of the projection device is determined firstly, the reference information of the projection device relative to the actual projection ground is determined according to the information of the actual projection ground, and the projection device is adaptively adjusted according to the specific reference information. When the vehicle is parked outdoors and on an uneven or inclined road surface, the projection device will also be synchronously adjusted according to the actual driving scenarios, to avoid the inclination or distortion of the image projected by the projection device. It can be adaptively adjusted according to the actual driving scenarios, thereby making it applicable to more driving scenarios with strong adaptability.

Other aspects will become apparent upon reading and understanding the drawings and detailed description.

### BRIEF DESCRIPTION OF DRAWINGS

FIG. 1 is a flowchart of a method for calibrating a vehicle projection device according to an embodiment of the present disclosure.
FIG. 2 is a flowchart of step S1 of the method for calibrating a vehicle projection device shown in FIG. 1.
FIG. 3 is a flowchart of a method for calibrating the vehicle projection device shown in FIG. 1 according to another embodiment of the present disclosure.
FIG. 4 is a flowchart of a method for calibrating the vehicle projection device shown in FIG. 1 according to another embodiment of the present disclosure.
FIG. 5 is a flowchart of a method for calibrating the vehicle projection device shown in FIG. 1 according to another embodiment of the present disclosure.
FIG. 6 is a flowchart of a method for calibrating the vehicle projection device shown in FIG. 1 according to another embodiment of the present disclosure.
FIG. 7 is a schematic diagram of a system for calibrating a vehicle projection device according to an embodiment of the present disclosure.

### DETAILED DESCRIPTION

Exemplary embodiments will be described in detail herein, examples of which are illustrated in the accompanying drawings. When the following description relates to the accompanying drawings, unless specified otherwise, the same numerals in different drawings represent the same or similar elements. Embodiments described in the exemplary embodiments below are not intended to represent all embodiments consistent with the present disclosure. Rather, they are merely embodiments of devices and methods consistent with some aspects of the present disclosure as recited in the appended claims.

Terms used in the present disclosure is only for the purpose of describing particular embodiments and is not intended to limit the present disclosure. Unless otherwise defined, technical terms or scientific terms used in the present disclosure should have a general meaning understood by those skilled in the art to which the present disclosure belongs. Terms such as "first" "second" and the like used in the specification and claims of the present disclosure do not indicate any order, quantity, or importance, but are merely used to distinguish different components. Likewise, terms such as "a" or "an" do not indicate the quantity limitation, but indicate that there is at least one. "a plurality of" or "several" means at least two. Unless otherwise indicated, terms such as "front," "rear," "lower," and / or "upper" are for ease of illustration only and are not limited to one position or one spatial orientation. Like words such as "comprise" or "include" mean that elements or objects appearing before "comprise" or "include" cover elements or objects listed after "comprise" or "include" and equivalents thereof, and do not exclude other elements or objects. The terms "connected" or "connected with" and the like are not limited to physical or mechanical connections, and may include electrical connections, whether direct or indirect.

As used in the specification of the present disclosure and the appended claims, the singular forms "a", "said" and "the" are intended to include the plural forms as well, unless the context clearly dictates otherwise. It should also be understood that the term "and/or" used herein includes any and all possible combinations of one or more of the associated listed items.

When a vehicle is parked outdoors and on an uneven or inclined road surface, the projection device installed on the vehicle may also incline accordingly, which may cause the image projected by the vehicle projection device to become inclined or distorted. Consequently, the calibration scheme inherently used by the vehicle projection device lacks adaptability and cannot be applied to more driving scenarios.

The present disclosure provides a method for calibrating a vehicle projection device includes: determining information of an actual projection ground of a projection device; determining reference information of the projection device relative to an actual projection ground, according to the information of the actual projection ground; and adjusting the projection device according to the reference information.

According to the method for calibrating the vehicle projection device of the present disclosure, the information of the actual projection ground of the projection device is determined firstly, the reference information of the projection device relative to the actual projection ground is determined according to the information of the actual projection ground, and the projection device is adaptively adjusted according to the specific reference information. When the vehicle is parked outdoors and on an uneven or inclined road surface, the projection device will also be synchronously adjusted according to the actual driving scenarios, to avoid the inclination or distortion of the image projected by the projection device. It can be adaptively adjusted according to the actual driving scenarios, thereby making it applicable to more driving scenarios with strong adaptability.

The following describes in detail a method and system for calibrating a vehicle projection device, a vehicle, and a storage medium in the present disclosure with reference to the accompanying drawings. The features in the following embodiments and implementations may be combined with each other without conflict.

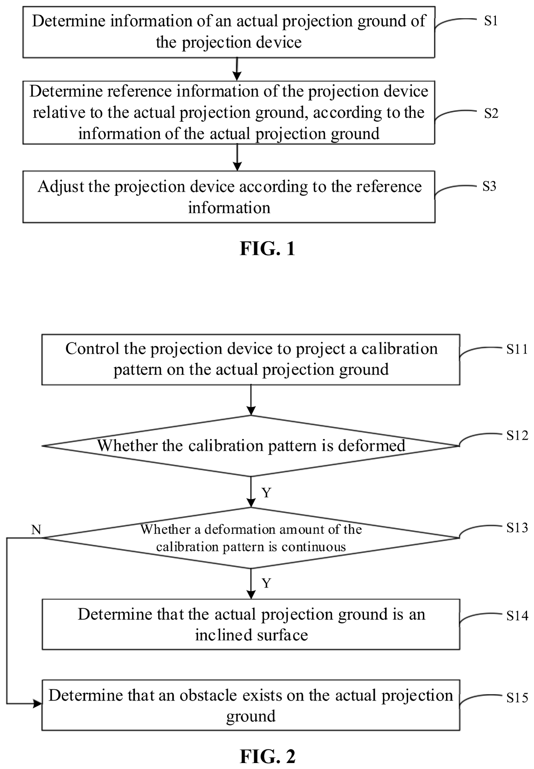

FIG. 1 is a flowchart of a method for calibrating a vehicle projection device according to an embodiment of the present disclosure. As shown in FIG. 1, the method for calibrating a vehicle projection device includes steps S1 to S3.

At step S1, information of an actual projection ground of the projection device is determined. In this embodiment, the vehicle's camera may be used to obtain the information of the actual projection ground of the projection device. Alternatively, the image projected by the projection device itself may be used to determine the information of the actual projection ground. The image projected by the projection device may be displayed on the actual projection ground. For example, the projection device is installed near the rear of the vehicle's roof, and the actual projection ground is the ground behind the vehicle. The information of the actual projection ground may include a type of the actual projection ground, for example, whether the ground is flat or inclined. The inclined surface refers to an actual projection ground that is inclined relative to the road surface directly below the vehicle, that is, there is an included angle between the inclined surface and the ground directly below the vehicle.

At step S2, reference information of the projection device relative to the actual projection ground is determined, according to the information of the actual projection ground. Different information of the actual projection ground results in different reference information of the projection device relative to the actual projection ground. The reference information includes an inclined angle of the projection device relative to the inclined surface and an obstacle boundary of the projection region.

At Step S3: the projection device is adjusted according to the reference information. If reference information is different, parameters for adjusting the projection device are different, for example, some reference information is for adjusting the angle of the projection device, some reference information is for adjusting a component of the projection device, and some reference information is for adjusting a drive component configured to control the projection device. The specific content of the reference information is not limited in the present disclosure.

Embodiments of the present disclosure provide a method and a system for calibrating a vehicle projection device, a vehicle and a storage medium. According to the method for calibrating the vehicle projection device, the information of the actual projection ground of the projection device is determined firstly, the reference information of the projection device relative to the actual projection ground is determined according to the information of the actual projection ground, and the projection device is adaptively adjusted according to the specific reference information. When the vehicle is parked outdoors and on an uneven or inclined road surface, the projection device will also be synchronously adjusted according to the actual driving scenarios, to calibrate the projection device, thereby avoiding the inclination or distortion of the image projected by the projection device. It can be adaptively adjusted according to the actual driving scenarios, thereby making it applicable to more driving scenarios with strong adaptability.

FIG. 2 is a flowchart of step S1 of the method for calibrating a vehicle projection device shown in FIG. 1. As shown in FIG. 2, step S1, determining the information of the actual projection ground of the projection device includes steps S11 to S15.

At step S11, the projection device is controlled to project a calibration pattern on the actual projection ground. The calibration pattern may be, for example, a black-and-white chess calibration pattern including black squares and white squares distributed in a checkerboard pattern in both the longitudinal direction and latitudinal direction, respectively. In this embodiment, the projection device may be a holographic grating module, the spatial position features of the calibration pattern are recorded in the holographic grating module during the exposure process by the holographic grating module, and during the projection process, by illuminating the holographic grating module with a light source, the virtual image of the original calibration pattern can be effectively seen. The virtual image includes a plurality of black square virtual images and a plurality of white square virtual images distributed in a checkerboard pattern in the longitudinal direction and the latitudinal direction, respectively.

At step S12, it is determined whether the calibration pattern is deformed. Normally, if the projection device projects onto a flat ground, the edges of the white squares and the black squares of the black-and-white chess calibration pattern are not easily deformed. If the projection device projects onto an uneven ground or a ground that is inclined relative to the vehicle, the edges of the white squares and the black squares of the black-and-white chess calibration pattern may be deformed. Therefore, by determining whether the calibration pattern is deformed, the actual projection ground is flat or inclined relative to the vehicle is roughly determined.

At step S13, when it is determined that the calibration pattern is deformed, it is determined whether a deformation amount of the calibration pattern is continuous. If it is determined that the calibration pattern is deformed, it indicates that the actual projection ground where the projection device projects is uneven or inclined relative to the vehicle. Further, whether the actual projection ground is flat or inclined relative to the vehicle is accurately determined by determining whether the deformation amount of the calibration pattern is continuous. If it is determined that the calibration pattern is not deformed, it indicates that the actual projection ground projected by the projection device is flat and not inclined, and the original projection parameters can be used.

At step S14, if the deformation amount of the calibration pattern is continuous, it is determined that the actual projection ground is an inclined surface. If the deformation amount of the calibration pattern is a continuous amount, for example, increasing or decreasing in sequence, the actual projection ground is determined to be a flat ground, and more precisely, is identified as an inclined surface without obstacles.

At step S15, if the deformation amount of the calibration pattern is discontinuous, it is determined that an obstacle exists on the actual projection ground. If the deformation amount of the calibration pattern is a discontinuous variable, such as suddenly changing and becoming larger during a sequential increase, or suddenly changing and becoming smaller during a sequential decrease, the actual projection ground is determined to be uneven, and more precisely, is identified as having the obstacles.

In the above solution, the calibration pattern projected by the projection device onto the actual projection ground is used as the calibration image or the reference image to accurately determine the type of the actual projection ground, thereby having high accuracy and providing accurate reference for the subsequent adjustment.

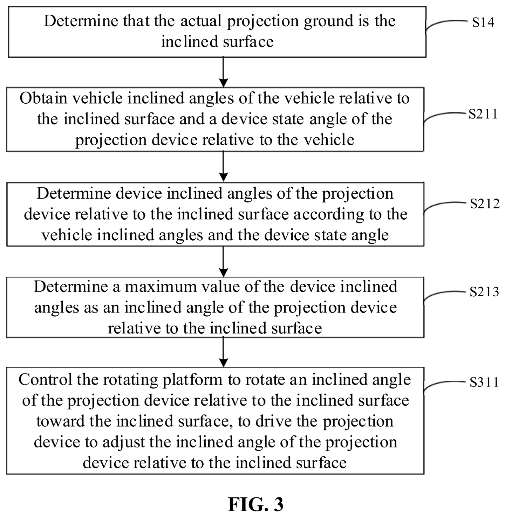

FIG. 3 is a flowchart of a method for calibrating the vehicle projection device shown in FIG. 1 according to another embodiment of the present disclosure. As shown in FIG. 3, at step S2, determining the reference information of the projection device relative to the actual projection ground according to the information of the actual projection ground includes steps S211 to S213. At step S3, adjusting the projection device according to the reference information includes step S311. Steps S211 to S213 are performed after step S14 and before step S311.

At step S211, vehicle inclined angles of the vehicle relative to the inclined surface and a device state angle of the projection device relative to the vehicle are obtained. This step is performed after step S14, an actual vehicle inclined angle of the vehicle relative to the inclined surface is obtained by using an inertial measurement unit (IMU) of the vehicle, where the vehicle inclined angle may be an included angle in X, Y, or Z axes of the geodetic coordinate system. The device state angle of the projection device relative to the vehicle may be a calibration angle of the projection device relative to the vehicle before leaving the factory, and the calibration angle may also be an included angle in the X, Y, or Z axes. The vehicle inclined angle may be an included angle between the ground directly below the vehicle and the actual projection ground, for example, the included angle between the ground directly below the vehicle and the horizontal plane is 10 degrees, the actual projection ground is the ground behind the rear of the vehicle, and the included angle between the actual projection ground and the horizontal plane is 3 degrees, and if the inclination directions of the actual projection ground and the ground directly below the vehicle are consistent, the vehicle inclined angle is 7 degrees.

At step S212, device inclined angles of the projection device relative to the inclined surface is determined according to the vehicle inclined angles and the device state angle. By using the obtained vehicle inclined angles and device state angle, the actual device inclined angles of the projection device relative to the inclined surface may be accurately obtained. The device inclined angle may be an included angle in the X, Y, or Z axes. The actual device inclined angle of the projection device relative to the inclined surface may be a difference between the vehicle inclined angle and the device state angle.

At step S213, a maximum value of the device inclined angles is determined as the inclined angle of the projection device relative to the inclined surface. When it is determined that the actual projection ground is an inclined surface, the variation of the inclination is a continuous variable, that is, the actual projection ground includes at least two planes with different inclined angles. In this case, the device inclined angles of the at least two projection devices relative to the inclined surface can be obtained according to the at least two vehicle inclined angles and the device state angle. Then, the maximum value of the device inclined angles is determined as the inclined angle of the projection device relative to the inclined surface, to ensure that the image projected by the subsequently adjusted projection device can be complete or not inclined, thereby improving viewing experience.

At step S3, adjusting the projection device according to the reference information includes step S311. Step S311 is performed after step S213. The vehicle includes a rotating platform, and the projection device is assembled on the rotating platform. The rotating platform drives the projection device to move horizontally and/or in pitch.

At step S311, the rotating platform is controlled to rotate an inclined angle of the projection device relative to the inclined surface toward the inclined surface, to drive the projection device to adjust the inclined angle of the projection device relative to the inclined surface. In this embodiment, the rotating platform is controlled according to the actually determined inclined angle of the projection device relative to the inclined surface, to drive the projection device to move, to adapt to the actual inclined surface, and ensure that the image projected by the adjusted projection device can be complete or not inclined, thereby improving the viewing experience.

In this embodiment, the rotation direction of the rotating platform is consistent with the inclination direction of the inclined surface relative to the ground directly below the vehicle. For example, it is detected that the actual inclined surface is inclined downward (the inclined surface may be parallel to the ground directly below the vehicle after rotating downward), and the rotating platform is controlled to move downward (that is, rotate toward a direction close to the ground directly below the vehicle). In this embodiment, when the device state angle is the calibration angle of the projection device relative to the vehicle before leaving the factory, the rotation angle of the rotating platform is consistent with the inclined angle of the inclined surface relative to the ground directly below the vehicle. For example, if it is detected that the actual inclined surface is inclined at 5 degrees relative to the ground directly below the vehicle, the rotation angle of the rotating platform is also 5 degrees. In this embodiment, the rotation direction of the rotating platform is consistent with the inclination direction of the inclined surface relative to the ground directly below the vehicle, and the rotation angle of the rotating platform is consistent with the inclined angle of the inclined surface relative to the ground directly below the vehicle. For example, it is detected that the actual inclined surface is inclined downward by 5 degrees, and the rotation angle of the controlled rotating platform is also inclined downward by 5 degrees.

In the above solution, when the determined actual projection ground is an inclined surface, the rotating platform of the hardware structure is controlled according to the actually determined inclined angle of the projection device relative to the inclined surface, to drive the projection device to move, to adapt to the actual inclined surface, and ensure that the image projected by the adjusted projection device can be complete or not inclined, thereby improving the viewing experience.

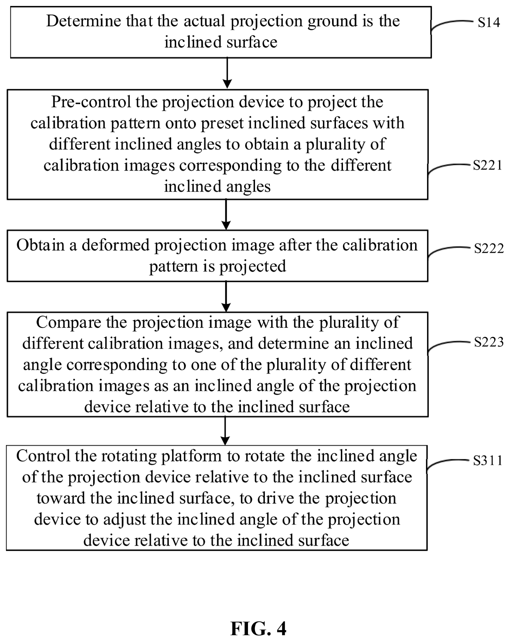

FIG. 4 is a flowchart of a method for calibrating the vehicle projection device shown in FIG. 1 according to another embodiment of the present disclosure. The embodiment shown in FIG. 4 is similar to the embodiment shown in FIG. 3, and the main difference is that the step S2 that determining the reference information of the projection device relative to the actual projection ground according to the information of the actual projection ground includes steps S221 to S223. At step S3, adjusting the projection device according to the reference information includes step S311. Steps S211 to S213 are performed after step S14 and before step S311.

At step S221, the projection device is pre-controlled to project the calibration pattern onto preset inclined surfaces with different inclined angles, to obtain a plurality of calibration images corresponding to the different inclined angles. For example, the projection device is pre-controlled in the database to project the calibration pattern onto preset inclined surfaces with different inclined angles such as 5 degrees, 10 degrees, and 15 degrees, to obtain a plurality of different calibration images. The projection device projects different calibration patterns onto inclined surfaces at different inclined angles such as 5 degrees, 10 degrees, and 15 degrees.

At step S222, a deformed projection image is obtained. When the projection device projects the calibration pattern onto the inclined surface, the calibration pattern may be deformed, and a deformed projection image may be obtained.

At step S223, the projection image is compared with the plurality of different calibration images, and an inclined angle corresponding to one of the plurality of different calibration images is determined as the inclined angle of the projection device relative to the inclined surface. For example, after the projection image is compared with a plurality of different calibration images, it is determined that the calibration image inclined by 5 degrees has the highest similarity to the actual obtained projection image, thereby determining that the inclined angle of the projection device relative to the inclined surface is 5 degrees, and thus the inclined angle of the inclined surface relative to the projection device can be determined.

In the above solution, by comparing the obtained projection image with pre-stored calibration images with different angles, a calibration image with a higher similarity to the obtained projection image is selected, and an inclined angle corresponding to the calibration image is determined as the inclined angle of the projection device relative to the inclined surface, so that the inclined angle of the projection device relative to the inclined surface can be roughly obtained, and this method is simple. The embodiment shown in FIG. 4 is similar to the embodiment shown in FIG. 3, and after the inclined angle of the projection device relative to the inclined surface is determined, the projection device is driven to move by controlling the rotating platform of the hardware structure to adapt to the actual inclined surface. The specific method of adjusting the projection device can be seen in the embodiment shown in FIG. 3. In this way, it is ensured that the image projected by the adjusted projection device can be complete or not inclined, thereby improving viewing experience.

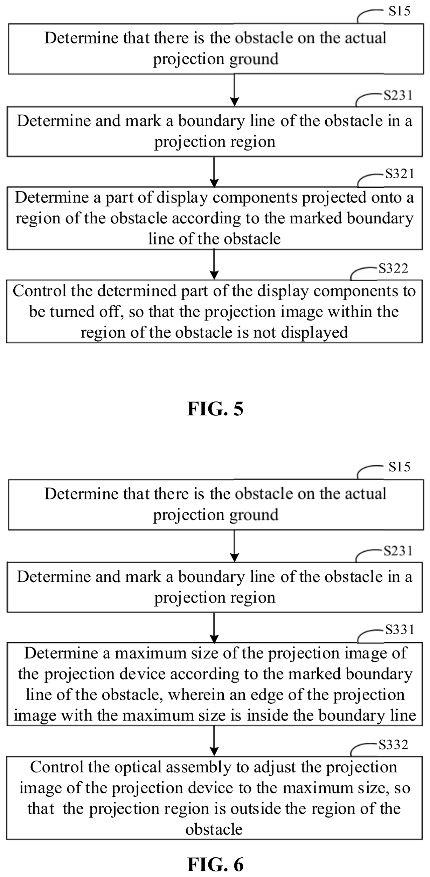

FIG. 5 is a flowchart of a method for calibrating the vehicle projection device shown in FIG. 1 according to another embodiment of the present disclosure. As shown in FIG. 5, at step S2, reference information of the projection device relative to the actual projection ground is determined according to the information of the actual projection ground includes step S231. At step S3: adjusting the projection device according to the reference information includes steps S321 to S322. Step S231 is performed after step S15 and before step S321.

At step S231, a boundary line of the obstacle in the projection region is determined and marked. After it is determined that there is an obstacle on the actual projection ground, the type of the obstacle may be determined by using the camera of the vehicle. For example, the obstacle may be a building or cliff above the ground, or may be a deep pit below the ground surface, etc. The holographic grating structure may determine the boundary line of the obstacle and mark the boundary line.

At step S321, a part of display components projected onto a region of the obstacle is determined according to the marked boundary line of the obstacle. The projection device is provided with display components for displaying images in an external environment. Based on the determined boundary lines of the obstacle, the part of display components projected onto the region of the obstacle are accurately determined.

At step S322, the determined part of the display components is controlled to be turned off, so that the projection image within the region of the obstacle is not displayed. By controlling the determined part of the display components, the projection image is not displayed in the region of the obstacle, thereby improving the viewing experience.

In the above solution, the part of the display components projected onto the region of the obstacle is accurately determined according to the determined boundary line of the obstacle, and the projection image is not displayed in the region of the obstacle by controlling the part of the display components, thereby improving the viewing experience.

FIG. 6 is a flowchart of a method for calibrating the vehicle projection device shown in FIG. 1 according to another embodiment of the present disclosure. The embodiment shown in FIG. 6 is similar to the embodiment shown in FIG. 5, with the main difference being that step S3 that adjusting the projection device according to the reference information further includes steps S331 to S332. Step S331 is performed after step S231. Steps S321 to S322 or steps S331 to S332 are performed after step S231.

At step S331, a maximum size of the projection image of the projection device is determined according to the marked boundary line of the obstacle, where an edge of the projection image with the maximum size is inside the boundary line. A maximum size of the projection image of the projection device is determined accurately according to the marked boundary line of the obstacle, thereby ensuring that an edge of the projection image with the maximum size is inside the boundary line.

At step S332, the optical assembly is controlled to adjust the projection image of the projection device to the maximum size, so that the projection region is outside the region of the obstacle. The projection device is provided with an optical assembly. The optical assembly may adjust the size of the projection image. By controlling the optical assembly, the projection image of the projection device is accurately adjusted to the maximum size, so that the projection region is outside the region of the obstacle, and the image is complete.

In some other embodiments, the angle of the projection device may also be adjusted by controlling the center console to calibrate the projection device to obtain a satisfactory projection position. To facilitate the user group with different usage habits, it is divided into two modes of automatic adjustment and manual adjustment; for manual adjustment, the user can control the projection graph in the X/Y directions of the vehicle through the control interface entry; for automatic adjustment, it is convenient for the user to set one key. At the same time, the function is provided with projection position memory, which can memorize the user's projection angle and position.

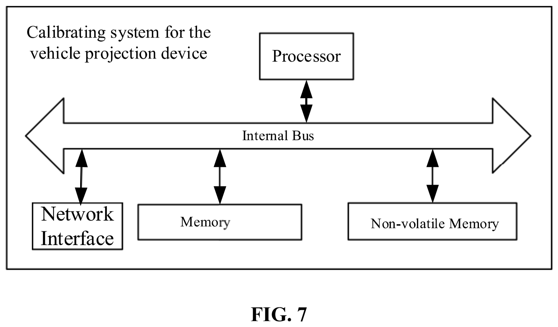

FIG. 7 is a schematic diagram of a system for calibrating a vehicle projection device according to an embodiment of the present disclosure. As shown in FIG. 7, the present disclosure further provides a computer-readable storage medium having programs stored thereon, where when the programs are executed by a processor, to implement the method for calibrating a vehicle projection device according to the above embodiments shown in FIGs. 1-6. In some embodiments, the computer-readable storage medium may be an internal storage unit of the abovementioned vehicle, such as a hard disk or a memory. The computer-readable storage medium may include an external storage device of the vehicle, such as a plug-in hard disk, a smart media card (SMC), an SD card, a flash card, etc. equipped on the device. Further, the computer-readable storage medium may include both the internal storage unit(s) and the external storage device(s) of the vehicle. The computer-readable storage medium is configured to store a computer program and other programs and data required by the vehicle, and may also be configured to temporarily store data that has been output or will be output. In terms of hardware, as shown in FIG. 7, which is a hardware structural diagram of a vehicle where a processor of the present disclosure is located, and in addition to the processor, the memory, the network interface, and the non-volatile memory described in FIG. 7, the vehicle where the calibration system is located in the embodiments may also include other hardware according to the actual function of the vehicle, which will not be repeated herein.

The present disclosure provides a system for calibrating a vehicle projection device, including: one or more processors for implementing the method for calibrating a vehicle projection device according to any one of the embodiments shown in FIGs. 1 to 6. For the system embodiment, it basically corresponds to the method embodiment, so the relevant parts may refer to the partial description of the method embodiment. The system embodiments described above are merely illustrative, where the units described as separate components may or may not be physically separated, and the components displayed as units may or may not be physical units, that is, the components may be located in one place, or may be distributed in multiple network units. Some or all of the units may be selected according to the actual requirement to achieve the objectives of the solutions of the present disclosure. Those skilled in the art can understand and implement the solutions without creative work.

A vehicle includes a system for calibrating a vehicle projection device. Through the system for calibrating the vehicle projection device, the vehicle is configured to implement the method for calibrating the vehicle projection device according to any one of FIGs. 1-6. In the present disclosure, a sensor, a camera, a millimeter-wave radar, etc. of a vehicle are combined to collect a surrounding environment of the vehicle and a state of the vehicle, and a light control system is formed by an optical assembly and a display component of a vehicle body, so that after the autonomous detection is performed on the surrounding environment of the vehicle, an appropriate mode (distance, brightness) is adaptively selected for projection. To ensure image quality of the projection image of the vehicle, in the foregoing related scenarios, an existing sensor of the vehicle is used to determine a surrounding environment of the vehicle and eliminate the impact of a vehicle's posture on the vehicle projection. When the vehicle is parked outdoors and on an uneven or inclined road surface, the projection device will also be synchronously adjusted according to the actual driving scenarios, to prevent the image projected by the projection device from being inclined or distorted, and it can be adaptively adjusted according to the actual driving scenarios. It can adapt to more driving scenarios with strong adaptability, thereby improving the viewing experience and user experience. The integrity, authenticity and accuracy of the vehicle for the two-dimensional projection image information of the vehicle can also be improved. The intelligent attributes of the vehicle can be enhanced, so that the two-dimensional projection image can cope with more driving scenarios. The existing hardware of the vehicle is applied, and the display effect is improved through the software capability. With the limited hardware investment, the wide range of the user benefits is enhanced. For the vehicle projection interaction, the clearer information display improves the attention and readability, also elevate the vehicle interaction, thereby pursuing the ultimate goal of intelligent vehicle interaction to enhance brand strength.

The above description are only optional embodiments of the present disclosure and is not intended to limit the present disclosure, and any modifications, equivalent substitutions, improvements and the like made within the spirit and the principle of the present disclosure shall fall within the protection scope of the present disclosure.

## Claims

1. A method for calibrating a projection device of a vehicle, comprising:
determining information of an actual projection ground of the projection device;
determining reference information of the projection device relative to the actual projection ground according to the information of the actual projection ground; and
adjusting the projection device according to the reference information.

2. The method according to claim 1, wherein determining the information of the actual projection ground of the projection device comprises:
controlling the projection device to project a calibration pattern on the actual projection ground;
determining whether a projection image of the calibration pattern is deformed;
in response to determining that the projection image of the calibration pattern is deformed, determining whether a deformation amount of the projection image of the calibration pattern is continuous;
in response to determining that the deformation amount of the projection image of the calibration pattern is continuous, determining that the actual projection ground is an inclined surface; and
in response to determining that the deformation amount of the projection image of the calibration pattern is discontinuous, determining that an obstacle exists on the actual projection ground.

3. The method according to claim 2, wherein after determining that the actual projection ground is the inclined surface, determining the reference information of the projection device relative to the actual projection ground according to the information of the actual projection ground comprises:
obtaining vehicle inclined angles of the vehicle relative to the inclined surface and a device state angle of the projection device relative to the vehicle;
determining device inclined angles of the projection device relative to the inclined surface according to the vehicle inclined angles and the device state angle; and
determining a maximum value of the device inclined angles as an inclined angle of the projection device relative to the inclined surface.

4. The method according to claim 2, wherein after determining that the actual projection ground is the inclined surface, determining the reference information of the projection device relative to the actual projection ground according to the information of the actual projection ground comprises:
pre-controlling the projection device to project the calibration pattern onto preset inclined surfaces with different inclined angles to obtain a plurality of calibration images corresponding to the different inclined angles;
obtaining a proj ection image after the calibration pattern is projected onto the actual projection ground;
comparing the projection image with the plurality of different calibration images; and
determining an inclined angle corresponding to one of the plurality of different calibration images as an inclined angle of the projection device relative to the inclined surface.

5. The method according to claim 3 or 4, wherein the vehicle comprises a rotating platform, and the projection device is assembled on the rotating platform; and adjusting the projection device according to the reference information comprises:
controlling the rotating platform to rotate the inclined angle of the projection device relative to the inclined surface toward the inclined surface, to drive the projection device to adjust the inclined angle of the projection device relative to the inclined surface.

6. The method according to claim 5, wherein a rotation direction of the rotating platform is consistent with an inclination direction of the inclined surface relative to a ground directly below the vehicle.

7. The method according to claim 5 or 6, wherein a rotation angle of the rotating platform is consistent with an inclined angle of the inclined surface relative to the ground directly below the vehicle.

8. The method according to claim 2, wherein after determining that there is the obstacle on the actual projection ground, determining the reference information of the projection device relative to the actual projection ground according to the information of the actual projection ground comprises:
determining and marking a boundary line of the obstacle in a projection region.

9. The method according to claim 8, wherein the projection device comprises display components; and adjusting the projection device according to the reference information comprises:
determining a part of display components projected onto a region of the obstacle according to the marked boundary line of the obstacle; and
controlling the determined part of the display components to be turned off, so that the projection image within the region of the obstacle is not displayed.

10. The method according to claim 8, wherein the projection device comprises an optical assembly; and adjusting the projection device according to the reference information comprises:
determining a maximum size of the projection image of the projection device according to the marked boundary line of the obstacle, wherein an edge of the projection image with the maximum size is inside the boundary line; and
controlling the optical assembly to adjust the projection image of the projection device to the maximum size, so that the projection region is outside the region of the obstacle.

11. A computer-readable storage medium, having programs stored thereon, wherein, when the programs are executed by a processor, to implement the method for calibrating the projection device of the vehicle according to any one of claims 1 to 10.

12. A system for calibrating a projection device of a vehicle, comprising: one or more processors for implementing the method for calibrating the projection device of the vehicle according to any one of claims 1 to 10.

13. A vehicle, comprising the system for calibrating the projection device of the vehicle of claim 12.
